# EUROPÄISCHE PATENTSCHRIFT

(11) **EP 1 481 828 B1**
(45) Veröffentlichungstag und Bekanntmachung des Hinweises auf die Patenterteilung: **21.07.2010**
(21) Anmeldenummer: 03291282.6
(22) Anmeldetag: 27.05.2003
(51) Int. Cl.: B60H 1/24, B60H 1/32, B32B 3/12

(54) **Wandstruktur für Bauteile von Fahrzeugklimaanlagen**
Wall structure for components of vehicle air conditioners
Structure de paroi pour composants de systèmes de climatisation de véhicules

(43) Veröffentlichungstag der Anmeldung: 01.12.2004
(73) Patentinhaber: Behr France Rouffach SAS, 68250 Rouffach (FR)
(72) Erfinder: Monnier, Yves, 68800 Thann (FR); Bohn, Serge, 68230 Turkheim (FR)
(74) Vertreter: Grauel, Andreas

(56) Entgegenhaltungen:
- EP-A- 0 217 522
- EP-A- 1 199 219
- DE-A- 19 807 292
- US-A- 3 016 315
- US-A- 5 635 306
- US-A- 5 919 545

## Beschreibung

Die Erfindung betrifft die Verwendung einer wabenförmig ausgebildeten Wandstruktur für ein Luftführungsgehäuse, eine Luft-Klappe und/oder einen Wasserkasten einer Klimaanlage eines Kraftfahrzeugs.

Die Wandstrukturen von Bauteilen von Klimaanlagen, wie Luftführungsgehäuse, Luftklappen, Wasserkästen, sind in der Regel als Vollmaterial ausgebildet. Bereichsweise sind zur Verstärkung Linearstrukturen (Verstärkungsrippen) vorgesehen, jedoch lassen diese Wandstrukturen noch Wünsche, insbesondere in Hinblick auf die Weiterleitung von Spannungen, offen.

Aus dem Dokument DE 198 07 292 A1 ist eine Belüftungsvorrichtung bekannt, welche Ausströmerdüsen mit einer Mehrzahl von Luftleitöffnungen aufweist, wobei ein von den Luftleitöffnungen durchsetzter Teil des Luftleitkörpers eine wabenartige Struktur hat.

Es ist Aufgabe der Erfindung, eine verbesserte Wandstruktur zur Verfügung zu stellen.

Diese Aufgabe wird gelöst durch die Verwendung einer Wandstruktur mit den Merkmalen des Anspruchs 1. Vorteilhafte Ausgestaltungen sind Gegenstand der Unteransprüche.

Erfindungsgemäß ist eine wabenförmige, insbesondere sechseckige, Wandstruktur vorgesehen. Eine derartige, gleichmäßig ausgebildete Wandstruktur stellt sicher, dass auf die Struktur einwirkende Spannungen gleichmäßig in alle Richtungen verteilt werden. Auf Grund der Optimierung können die Wandstärken verringert werden, so dass Material und somit auch Gewicht eingespart werden kann. Wird eine entsprechende Struktur für Klappen verwendet, so kann, da sich auch die Bauhöhe verringern lässt, der Strömungswiderstand der Klappen verringert werden.

Bevorzugt sind die einzelnen Seitenlängen der die Wabenstruktur bildenden Waben gleich lang, so dass eine Kraftweiterleitung möglichst gleichmäßig in alle Richtungen erfolgt und die Belastungen gleichmäßig verteilt werden.

Vorzugsweise ist die Wandstärke über wesentliche Bereiche der Wandstruktur gleich stark. Bei unterschiedlichen Wandstärken kann eine Veränderung der Wabenabmessungen sinnvoll sein, um weiterhin eine gleichmäßige Belastungsverteilung zu gewährleisten.

Die Waben erstrecken sich im Wesentlichen flächig, wobei sie in Richtung der größten flächigen Abmessung der Wandstruktur ausgerichtet sind.

Zur Verbesserung der Strömungseigenschaften entlang erfindungsgemäßer Wandstrukturen sind die Waben beidseitig durch eine dünne Schicht abgedeckt.

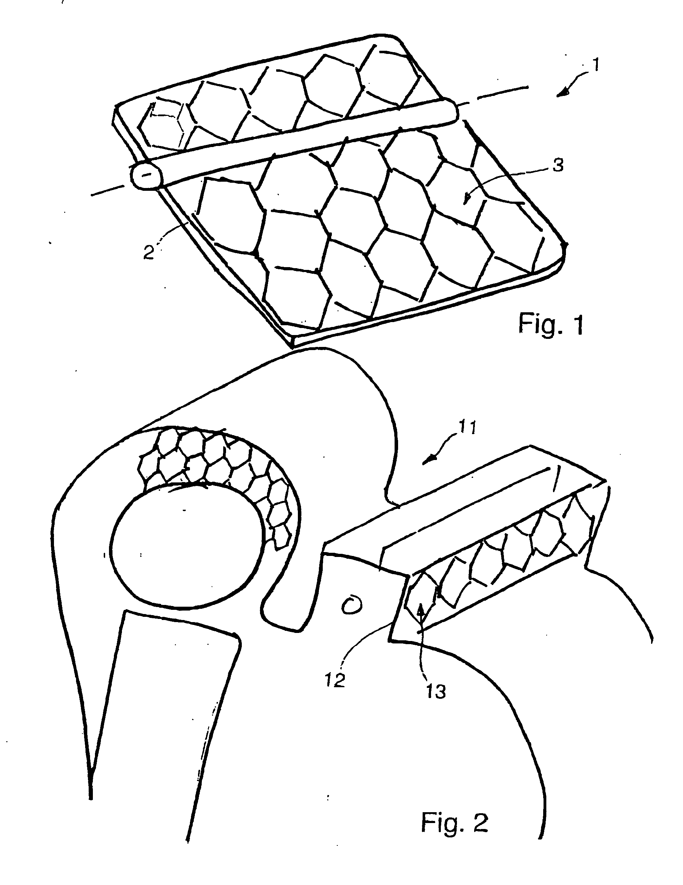

Im Folgenden wird die Erfindung anhand zweier Ausführungsbeispiele unter Bezugnahme auf die Zeichnung im Einzelnen erläutert. In der Zeichnung zeigen:
- Fig. 1: eine schematische Ansicht einer Luft-Klappe, und
- Fig. 2: eine schematische Ansicht eines Gehäuses.
Eine erfindungsgemäße Luft-Klappe 1 weist über ihre gesamte flächige Erstreckung hinweg eine wabenförmige Wandstruktur 2 mit einer Vielzahl einzelner, miteinander verbundener Waben 3 auf. Hierbei haben die Waben 3 eine sechseckförmige Gestalt, wobei die einzelnen Seitenlängen im Wesentlichen gleich lang sind. Die wabenförmige Wandstruktur 2 erstreckt sich über die gesamte Fläche der Luft-Klappe 1, wobei sie oben und unten mit Hilfe einer dünnen Schicht geschlossen ist, was jedoch zur einfacheren Darstellung in Fig. 1 nicht dargestellt ist. Der sechseckige Querschnitt der einzelnen Waben 3 liegt hierbei in der Ebene der größten flächigen Erstreckung der Luft-Klappe 1.

Fig. 2 zeigt ein schematisch angedeutetes Luftführungsgehäuse 11 einer Klimaanlage eines Kraftfahrzeugs. Dieses weist ebenfalls über seine gesamte Erstreckung hinweg eine wabenförmige Wandstruktur 12 auf, wobei vorliegend zwei unterschiedliche Erstreckungsrichtungen dargestellt sind. Die Ausrichtung der Waben 13 hängt insbesondere von der Haupt-Belastungsrichtung ab, so dass eingeleitete Kräfte möglichst gleichmäßig über die gesamte Struktur verteilt und Verformungen möglichst gering gehalten werden können.

### Bezugszeichenliste

- 1: Luft-Klappe
- 2, 12: Wandstruktur
- 3, 13: Wabe
- 11: Luftführungsgehäuse

## Patentansprüche

1. Verwendung einer wabenförmig ausgebildeten Wandstruktur (2; 12) für ein Luftführungsgehäuse (11), eine Luft-Klappe (1) und/oder einen Wasserkasten einer Klimaanlage eines Kraftfahrzeugs, **dadurch gekennzeichnet, dass** die Waben (3; 13) der Wandstruktur (2, 12) beidseitig durch eine dünne Schicht abgedeckt sind.

2. Verwendung einer Wandstruktur nach Anspruch 1, **dadurch gekennzeichnet, dass** die Waben (3; 13) der Wandstruktur (2; 12) sechseckig ausgebildet sind.

3. Verwendung einer Wandstruktur nach Anspruch 1 oder 2, **dadurch gekennzeichnet, dass** die einzelnen Seitenlängen der die Wabenstruktur (2; 12) bildenden Waben (3; 13) gleich lang sind.

4. Verwendung einer Wandstruktur nach einem der vorhergehenden Ansprüche, **dadurch gekennzeichnet, dass** die Wandstärke über wesentliche Bereiche der Wandstruktur (2; 12) gleichstark ist.

5. Verwendung einer Wandstruktur nach einem der vorhergehenden Ansprüche, **dadurch gekennzeichnet, dass** die wabenförmige Wandstruktur (2; 12) sich im Wesentlichen flächig unter Bildung einer Vielzahl einzelner Waben (3; 13) erstreckt..

6. Verwendung einer Wandstruktur nach einem der vorhergehenden Ansprüche, **dadurch gekennzeichnet, dass** die Waben (3; 13) in Richtung der größten flächigen Abmessung der Wandstruktur ausgerichtet sind.

## Claims

1. Use of a honeycombed wall structure (2; 12) for an air conduction housing (11), an air damper (1) and/or a water tank of an air conditioner of a motor vehicle, **characterized in that** the honeycombs (3; 13) of the wall structure (2, 12) are covered on both sides by a thin layer.

2. Use of a wall structure according to claim 1, **characterized in that** the honeycombs (3; 13) of the wall structure (2; 12) have a hexagonal configuration.

3. Use of a wall structure according to claim 1 or 2, **characterized in that** the individual side lengths of the honeycombs (3; 13) forming the honeycombed structure (2; 12) are equal in length.

4. Use of a wall structure according to any one of the preceding claims, **characterized in that** the wall thickness is uniformly thick over substantial regions of the wall structure (2; 12).

5. Use of a wall structure according to any one of the preceding claims, **characterized in that** the honeycombed wall structure (2; 12) extends in a substantially planar manner to form a plurality of individual honeycombs (3; 13).

6. Use of a wall structure according to any one of the preceding claims, **characterized in that** the honeycombs (3; 13) are oriented in the direction of the largest planar dimension of the wall structure.

## Revendications

1. Utilisation d'une structure de paroi (2 ; 12) configurée en forme de nid d'abeilles, pour un carter de guidage d'air (11), un volet d'air (1) et / ou pour une boîte à eau d'un système de climatisation d'un véhicule automobile,
**caractérisée en ce que** les alvéoles (3 ; 13) de la structure de paroi (2 ; 12) sont recouvertes, des deux côtés, par une mince couche.

2. Utilisation d'une structure de paroi selon la revendication 1, **caractérisée en ce que** les alvéoles (3 ; 13) de la structure de paroi (2 ; 12) sont configurées de façon hexagonale.

3. Utilisation d'une structure de paroi selon la revendication 1 ou 2, **caractérisée en ce que** les différentes longueurs latérales des alvéoles (3 ; 13) formant la structure en nid d'abeilles (2 ; 12) sont de longueur identique.

4. Utilisation d'une structure de paroi selon l'une quelconque des revendications précédentes, **caractérisée en ce que** l'épaisseur de paroi est identique sur des zones essentielles de la structure de paroi (2 ; 12).

5. Utilisation d'une structure de paroi selon l'une quelconque des revendications précédentes, **caractérisée en ce que** la structure (2 ; 12) en forme de nid d'abeilles s'étend pratiquement sur toute la surface, en formant une multiplicité d'alvéoles différentes (3 ; 13).

6. Utilisation d'une structure de paroi selon l'une quelconque des revendications précédentes, **caractérisée en ce que** les alvéoles (3 ; 13) sont orientées en direction de la plus grande dimension de surface de la structure de paroi.
